# EUROPEAN PATENT SPECIFICATION

(11) **EP 2 660 495 B1**
(45) Date of publication and mention of the grant of the patent: **07.07.2021**
(21) Application number: 12290154.9
(22) Date of filing: 04.05.2012
(51) Int. Cl.: F16K 11/044

(54) **Control valve unit of a liquid circuit of an internal combustion engine**
Steuerventileinheit eines Flüssigkeitskreises eines Verbrennungsmotors
Unité de soupape de commande d'un circuit de liquide d'un moteur à combustion interne

(43) Date of publication of application: 06.11.2013
(73) Proprietor: THERMAL CONTROL SYSTEMS AUTOMOTIVE (TCFR), 53810 Changé (FR)
(72) Inventor: Marimbordes, Thierry, 53170 Bazougers (FR)
(74) Representative: Gevers & Orès

(56) References cited:
- EP-A1- 0 907 046
- EP-A1- 1 406 035
- WO-A1-2009/122762
- US-A- 3 329 165
- US-A1- 2001 049 043

## Description

### Technical Field

The present invention relates to a control valve unit of a liquid circuit, in particular a cooling circuit, of an internal combustion engine in particular of a motor vehicle, comprising a valve housing, which has at least one inlet/outlet opening and at least one closable outlet/inlet opening, and at least one closing element actuated by a control device, which can open or close the at least one closable outlet/inlet opening.

### State of Technology

EP 1 486 843 A1 discloses a thermostatic valve of a cooling circuit of an internal combustion engine of a commercial vehicle. The thermostatic valve comprises a housing which defines openings for circulation of fluid, a movable socket for regulation of a fluid flow through the openings, a fixed seating for receiving the socket and a thermostatic element whose piston is shiftable and supports the socket for actuating at least partly the movements of the socket toward the seating. The thermostatic element contains an expandable wax. In an operation state, when the thermostatic element is inactive, the movable socket closes a first of two outlet openings. If the fluid temperature is rising, the piston of the thermostatic element moves the socket for allowing fluid flow through the first outlet opening and closing a second of the two openings.

The WO 2009/122762 A1 discloses a three-way valve having a simple structure, small sized, and a fluid supply circuit, requiring high reliability with a first shaft moving axially, a first valve element provided at the head of the first valve shaft and lifting off and sitting on a first valve seat to open and close a first flow path, a second valve shaft moving axially and coaxially the first valve shaft.

From EP 1 406 035 A1 a three way diverting valve comprising a three way valve body and a driving assembly designed to control the flow diversion is known, with a valve element designed to abut against a respective valve seat with a shutter element and valve seats being positioned on opposite sides.

The US 2001/049043 A1 shows a three-way valve assembly for selective dividing and regulating the flow of a fluid entering the assembly through a non-regulating port and exiting the assembly through a first and second regulated ports.

The EP 0 907 046 discloses a valve assembly for heating systems and water heaters comprising a valve body, a shutter slidably mounted with a respective seat wherein in a first and a second position the shutter is removably received in a fluid-tight manner and substantially

It is an object of the invention to provide a control valve unit of a liquid circuit of the above-mentioned kind, with which a liquid flow through the closable openings can be controlled precisely.

### Disclosure of Invention

The object is achieved by that the control device comprises an electrically driven linear actuator and at least one piston, which is drivable at least by the actuator, is arranged between the actuator and the at least one closing element for direct coupling of the actuator with the at least one closing element at least in one actuation direction.

According to the invention, a liquid flow through the at least two closable outlet or inlet openings can be controlled precisely by use of the electrically driven linear actuator.

Advantageously, the electrically driven linear actuator can be connected controllable to an electronic control unit (ECU) of the internal combustion engine, which can control the actuator.

Alternatively, a separate electronic control device can be connected controllable to the actuator for controlling. A control connection between the ECU or the separate electronic control device to the actuator can be realized by wire or wireless.

Particularly, at least one temperature sensor can be arranged in a liquid-bearing space upstream and/or downstream the at least two closable outlet or inlet openings. The at least one temperature sensor can have at least one signal connection to the ECU or the possible separate electronic control device. In this way, the actuator can be controlled dependent on the corresponding temperatures of the liquid. The at least one signal connection between the at least one temperature sensor and the ECU or the separate electronic control device can be realized by wire or wireless. A hysteresis of the electrically controlled and driven actuator is smaller than a hysteresis of a thermostatic wax element known from the state of the art.

Further, a response time on temperature changes of the liquid can be shorter than the response time of a wax element. As well, the controlling of the liquid flow by the electronically controlled and driven actuator dependent on the liquid temperature can be more precise than the controlling of the liquid flow by a wax element. With an electronically controlled and driven actuator it is possible to balance the flow between the outlets to reach intermediate temperatures by shifting the valve continuously variable.

The at least one piston allows that the electrically driven linear actuator can be placed distant from the at least one closing element. With the piston, a linear movement caused by the electrically driven linear actuator can be transferred directly to the at least one closing element. Direct coupling of the actuator with the at least one closing element in at least one actuation direction means that there is no flexible or elastic element, in particular a spring and/or a wax element, between the actuator and the at least one closing element. This allows a direct movement of the at least one closing element by the actuator without any hysteresis and/or delay. Particularly, the direct coupling can act in both directions. Additionally, the required space of a linear actuator is smaller than the required space of a rotary drive. Advantageously, the control valve unit can be placed in a cooling circuit of the internal combustion engine. The at least one closable opening can be part of a main arm or a bypass arm of the cooling circuit. With the electrically driven linear actuator a flow of cooling liquid through the main arm or the bypass arm can be controlled dependent on a temperature of the cooling liquid upstream or downstream the closable opening. So, in a cold start stage of the internal combustion engine, the closable opening of the main arm of the cooling circuit can be closed completely, whereby the closable opening of the bypass arm can be opened completely. The cooling liquid then flows solely through the bypass arm. With rising temperature of the cooling liquid, the closable opening of the main arm can continuously be opened with the electrically driven linear actuator. Accordingly, the closable opening of the bypass arm inversely can be closed. So the warm-up period of the internal combustion engine can be shortened. Advantageously, multiple electrically driven linear actuators can be combined in a control valve module for controlling a liquid flow through according closable outlet or inlet openings.

According to a favorable embodiment of the invention, the valve housing can have at least two closable outlet/inlet openings and the at least one closing element can inversely open or close the at least two closable outlet/inlet openings. In this way, only one electrically driven linear actuator is necessary for controlling at least two closable openings. One of the at least two closable openings can be part of a main arm, the other closable opening can be part of a bypass arm of a cooling circuit. With the electrically driven linear actuator a flow of cooling liquid through the main arm and the bypass arm can be controlled simultaneously dependent on a temperature of the cooling liquid upstream or downstream the closable openings. So, in a cold start-up stage of the internal combustion engine, the closable opening of the main arm of the cooling circuit can be closed completely, whereby the closable opening of the bypass arm can be opened completely. The cooling liquid then flows solely through the bypass arm. With rising temperature of the cooling liquid, the closable opening of the main arm can continuously be opened with the electrically driven linear actuator. Simultaneously, the closable opening of the bypass arm inversely can be closed. So the warm-up period of the internal combustion engine can be shortened by use of only one electrically driven linear actuator.

According to the invention, a leader element connects a piston of the actuator and a piston of the at least one closing element. So the actuator and the at least one closing element can be pre-casted separately and connected according to requirements. In particular, the at least one closing element with its piston can be arranged in the interior of the valve housing in a way that the piston is accessible from outside of the housing. The actuator can be placed outside the housing and its piston can be inserted through a possible lead-through opening of the housing for connection with the piston of the at least one closing element. A diameter of the possible lead-through opening can be minimized. Further, a sealing can be arranged between the two pistons for sealing the possible lead-through opening. Advantageously, the leader element can interact with the possible sealing for improving the sealing efficiency. In particular, the leader element can compress the possible sealing. Moreover, the leader element can compensate orientation and position tolerances of the two pistons. Besides, the piston of the actuator and the piston of the at least one closing element can be made of different materials. Advantageously, the leader element can have a socket, which can be fixed at a free end of one of the pistons. The free end of the other piston can be stuck in the socket. The outer diameter of the free end of this piston can be smaller than the inner diameter of the socket, so that the connection is flexible in radial direction. So, a compensation of tolerances can be improved further.

According to a further favorable embodiment of the invention, the leader element can have at least one stop unit, which can stop a relative movement between the piston of the actuator and the piston of the at least one closing element at least in an actuation direction of the linear actuator. Favorably, the two pistons can be coaxial, so that their free ends can retain each other in axial direction. If the free ends of the two pistons meet each other, a further relative movement between the pistons can be stopped. The front faces of the free ends of the pistons so can act as stop units. Advantageously, the leader element can have a socket, which is closed at one front end. The leader element is fixed at the outer side of the closed front end at the free end of one of the pistons. The free end of the other piston can be stuck in the socket. The close front end of the leader element acts as a stop unit, which can stop a relative movement between the two pistons in pushing direction of the linear actuator.

Favorably, the leader element can be made of plastic. With plastic, a tolerant connection between the two pistons can be realized. A tolerance compensation can be improved. The leader element can also be made of a material different from plastic, in particular a metal.

According to the invention, the actuator is placed outside of a liquid-bearing area of the valve housing and the valve housing can have at least one lead-through opening for the at least one piston. In this way, the actuator can be protected against the liquid in the liquid circuit. Further, the actuator can be accessible without opening the liquid circuit. So a maintenance of the actuator can be simplified. In addition, the liquid flow in the housing is not disturbed by the existence of the actuator. Furthermore, the dimensions of the valve housing can be reduced.

At least one diaphragm is sealing the at least one lead-through opening against the at least one piston. The diaphragm can be flexible, so that its shape can adapt dependent on the position of the at least one piston. Particularly, a radial outer edge of the diaphragm can be fixed at a part of the housing, which surrounds the at least one lead-through opening. A center of the diaphragm can be fixed at the at least one piston. A friction between the sealing, namely the diaphragm, the housing and/or the at least one piston can be avoided.

Alternatively or additionally, at least one dynamic gasket can seal the at least one lead-through opening against the at least one piston. Favorably, the dynamic gasket can be a ring seal, in particular a slide ring seal. Advantageously, the dynamic gasket can be fixed at a part of the housing, which surrounds the at least one lead-through opening. The at least one piston can lead through a center opening of the dynamic gasket. If the at least one piston is moved, its radial outer circumferential side slides along the radial inner circumferential side of the dynamic gasket.

According to the invention, a return element, in particular a spring, retains against the at least one closing element on one hand and the valve housing on the other hand, whereby a reset force of the return element is directed in or against the at least one actuation direction of the linear actuator. Advantageously, the return element can maintain the at least one closing element in a home position when the internal combustion engine is in nonworking stage. Particularly, in the home position at least one of the closable openings can be closed by the at least one closing element. Favorably, the return element can support a movement of the at least one closing element into its home position, if the linear actuator is inactivated. Favorably, the reset force of the return element is directed against the actuation direction of the linear actuator. In particular, the reset force is directed against a possible at least one stop unit.

### Brief Description of Drawings

The present invention together with the above-mentioned and other objects and advantages may best be understood from the following detailed description of the embodiments, but not restricted to the embodiments, wherein is shown schematically
- Figure 1: a longitudinal section of a control valve unit of a cooling circuit of an internal combustion engine of a motor vehicle comprising an electrically driven linear actuator, in a home position;
- Figure 2: the control valve unit of Figure 1 in an actuated position;
- Figure 3: a detail of a diaphragm for sealing a lead-through opening of a housing of the control valve unit of Figures 1 and 2;
- Figure 4: a detail of a slide ring seal for sealing a lead-through opening of a housing of an alternative control valve unit, not part of the invention as defined by the claims and shown for illustrative purposes only.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

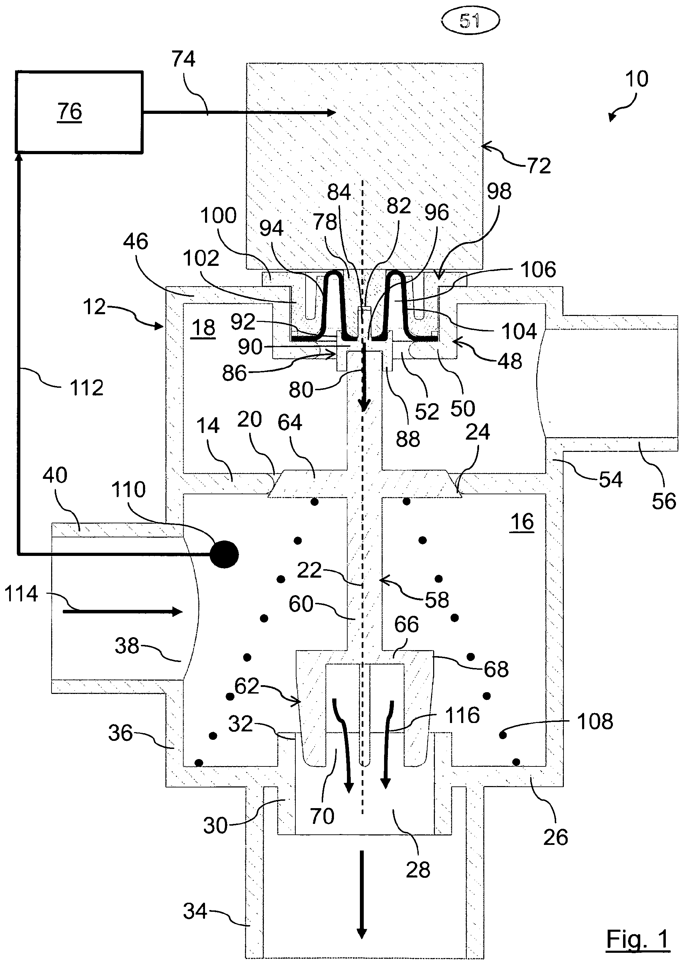

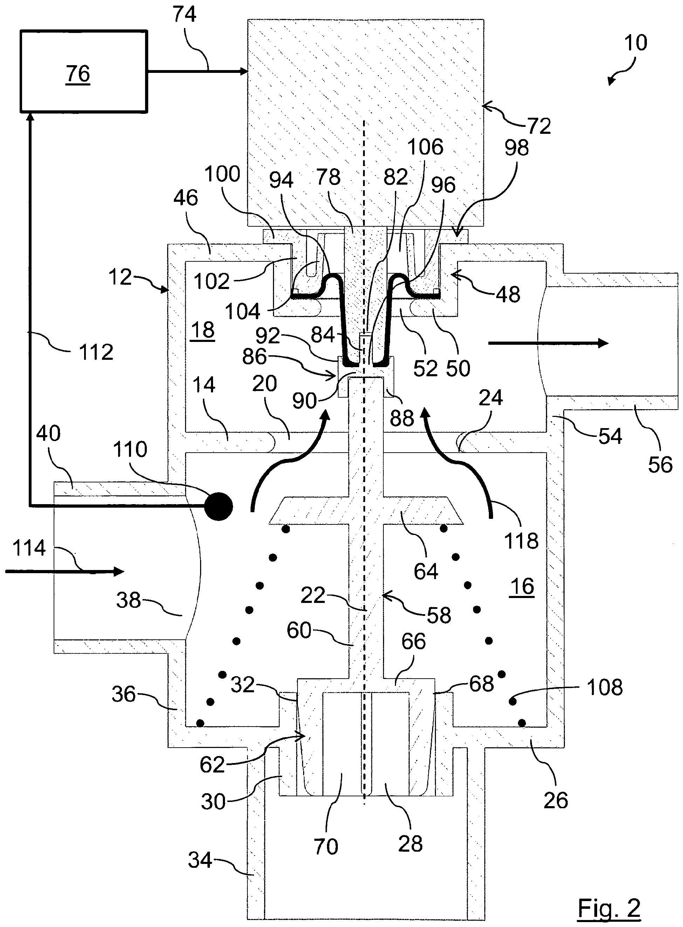

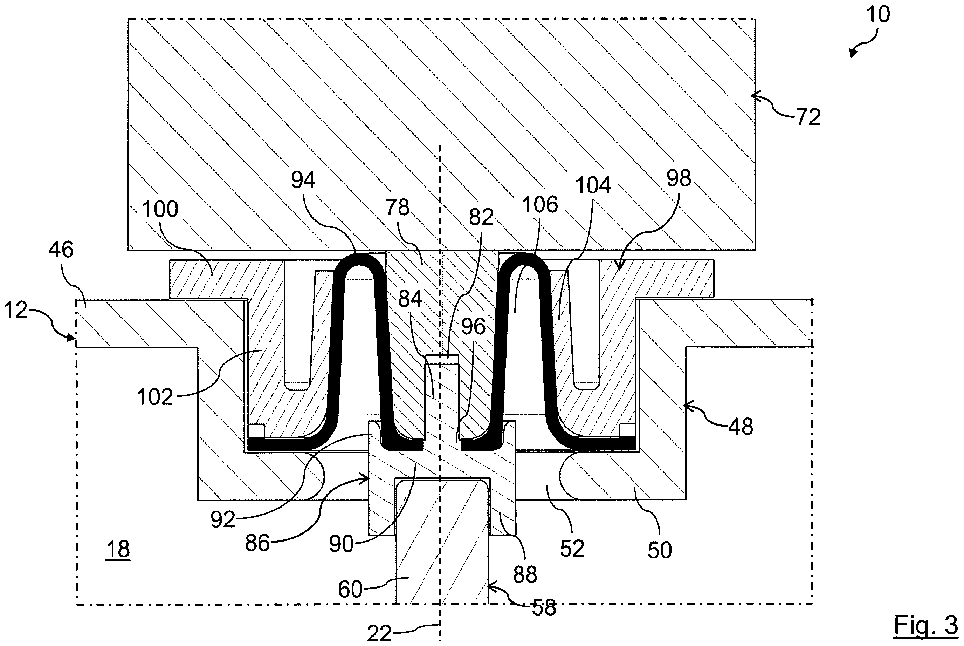

In Figure 1 a longitudinal section of a control valve unit 10 of a cooling circuit of an internal combustion engine of a motor vehicle in a home position is depicted. Figure 2 shows the control valve unit 10 in an operation state when a cooling liquid of the cooling circuit is warmed up. In Figure 3 a detail of the control valve unit 10 is depicted.

The control valve unit 10 is comprising a valve housing 12. The valve housing 12 is divided by an intermediate wall 14 in an inlet chamber 16 and an outlet chamber 18. The intermediate wall 14 has a main outlet opening 20 for cooling fluid, which is coaxial to a virtual axis 22. The main outlet opening 20 connects the interior of the inlet chamber 16 with the interior of the outlet chamber 18. On the side of the intermediate wall 14, which faces the interior of the inlet chamber 16, an edge, which surrounds the main outlet opening 20, forms a main seating 24.

An outer wall 26 of the inlet chamber 16, which is on the opposite side of the intermediate wall 14, has a bypass outlet opening 28 for cooling fluid. The bypass outlet opening 28 is coaxial to the virtual axis 22. The bypass outlet opening 28 is surrounded by a cylindrical section 30. The cylindrical section 30 is connected in one piece with the outer wall 26 of the inlet chamber 16. An edge of the cylindrical section 30 in the interior of the inlet chamber 16 forms a bypass seating 32. On the outer side of the outer wall 26, the cylindrical section 30 is surrounded by a bypass outlet port 34. The bypass outlet port 34 is coaxial to the virtual axis 22. The bypass outlet port 34 is connected to a bypass duct of a bypass branch of the cooling circuit, which is, for the sake of clarity, not shown in the Figures. The bypass branch bypasses a not shown cooling unit of the cooling circuit.

A side wall 36 of the inlet chamber 16 has an inlet opening 38 for cooling fluid. On the outer side of the side wall 36, the inlet opening 38 is surrounded by an inlet port 40. The inlet port 40 is connected to an inlet duct of the cooling circuit, which is, for the sake of clarity, not shown in the Figures.

An outer wall 46 of the outlet chamber 18, which is on the opposite side of the intermediate wall 14, has a cup-shaped indentation 48, which is directed to the interior of the outlet chamber 18. The indentation 48 is cylindrical and coaxial to the virtual axis 22. A bottom wall 50 of the indentation 48 has a lead-through opening 52, which is coaxial to the virtual axis 22.

A side wall 54 of the outlet chamber 18, which is on the opposite side of the inlet opening 38 of the inlet chamber 16, has a main outlet port 56 with an opening for cooling fluid. The main outlet port 56 is arranged on the outer side of the side wall 54. The main outlet port 56 is connected to a main outlet duct of a main branch of the cooling circuit, which is, for the sake of clarity, not shown in the Figures. In the main branch, the cooling unit is arranged.

A valve 58 with a valve piston 60, a bypass closing element 62 and a main closing element 64 is arranged in the valve housing 12. The valve 58 is realized in one piece. The valve piston 60 is coaxial to the virtual axis 22. It extends from the lead-through opening 52 through the outlet chamber 18 and the main outlet opening 20 into the interior of inlet chamber 16.

In the home position, a conical radial outer edge of the saucer-shaped main closing element 64 abuts against the main seating 24 at the main outlet opening 20, which faces the interior of the inlet chamber 16. So, the main outlet opening 20 is closed by the main closing element 64.

The cup-shaped bypass closing element 62 is arranged in the interior of the inlet chamber 16. A bottom wall 66 of the bypass closing element 62 is connected to the end of the valve piston 60, which faces to the bypass outlet opening 28. A radial outer circumferential side of the bypass closing element 62 is conical to guide the bypass closing element 62 from the home position of the closing element 64 to the full opening position of the closing element 64 into the cylindrical section 30. The radial outer diameter decreases in direction toward the bypass outlet opening 28. The radial outer circumferential side of the bottom wall 66 forms an annular seating area 68, which fits to the bypass seating 32. A circumferential wall of the bypass closing element 62 has apertures 70. The apertures 70 extend in axial direction from the bottom wall 66 to the edge of the circumferential wall. In the home position, only a part of the circumferential wall of the bypass closing element 62 reaches into the cylindrical section 30. The bypass outlet opening 28 is completely open.

An electrically driven linear actuator 72 for actuating the valve 58 is mounted on the outside of the outer wall 46 of the outlet chamber 18. The actuator 72 comprises a step motor, which is not reversible. The actuator 72 is connected controllable by use of cables 74 two an electronic control unit (ECU 76) of the internal combustion engine, which can control the actuator 72. The actuator 72 has an actuator piston 78, which extends coaxial to the virtual axis 22 towards the lead-through opening 52. The actuator piston 78 is shiftable relative to the valve housing 12 axial to the virtual axis 22. An actuation direction 80 of the actuator 72 is indicated with an arrow. In its front side, which faces towards the valve piston 60, the actuator piston 78 has a blind hole 82 for inserting a connection pin 84 of a valve leader 86. The blind hole 82 is coaxial to the virtual axis 22. The connection pin 84 is fixed permanently into the blind hole 82, e.g. press fitted. The valve leader 86 can be made of plastic.

The valve leader 86 further has a cup-shaped connection socket 88. An open front side of the connection socket 88 faces toward the valve piston 60. A circumferential wall of the connection socket 88 is coaxial to the virtual axis 22. The connection pin 84 is arranged in one piece on the outside of a bottom 90 of the connection socket 88. On the outside of the connection socket 88, an annular frame 92 is arranged in one piece at the radial outer edge of the bottom 90 of the connection socket 88. The frame 92 is coaxial to the virtual axis 22 and surrounds the connection pin 84. The frame 92 extends from the outside of the bottom 90 of the connection socket 88 towards the actuator 72. It surrounds the end of the actuator piston 78. A radial outer diameter of the end of the actuator piston 78 is smaller than a radial inner diameter of the frame 92.

Between the valve leader 86 and the end of the actuator piston 78 a diaphragm 94 is arranged. The connection pin 84 reaches through a hole 96 in the center of the diaphragm 94. The diaphragm 94 is made of a flexible material. The diaphragm 94 is compressed between the bottom 90 of the connection socket 88 and the front side of the end of the actuator piston 78. Thus, the hole 96 of the diaphragm 94 is liquid-sealed.

The free end of the valve piston 60 is inserted in the connection socket 88 of the valve leader 86. A radial outer diameter of the end of the valve piston 60 is smaller than a radial inner diameter of the connection socket 88. Between the radial outer circumferential side of the valve piston 60 and the radial inner circumferential side of the connection socket 88 a radial clearance is realized. With the radial clearance a orientation and location tolerance of the valve piston 60 and the actuator piston 78 can be compensated. The bottom 90 of the connection socket 88 further acts as a stop unit for the valve piston 60. Thus, an actuation force generated by the actuator 72 can be transmitted from the actuator piston 78 with the help of the valve leader 86 directly to the valve piston 60.

A radial outer edge of the diaphragm 94 is fixed liquid and air tight between the inner side of the bottom wall 50 of the indentation 48 and a diaphragm cover 98. The diaphragm cover 98 has a flange section 100, a radial outer circumferential section 102 and a radial inner circumferential section 104, which are connected in one piece. The flange section 100 has an annular shape. It projects in radial direction above the open side of the indentation 48. The radial outer circumferential side of the radial outer circumferential section 102 has a cylindrical shape. The radial outer circumferential section 102 extends from the radial inner edge of the flange section 100 towards the inner side of the bottom wall 50 of the indentation 48. There, it changes into the radial inner circumferential section 104. The radial inner circumferential section 104 has a cylindrical shape. The radial inner diameter of the radial inner circumferential section 104 is more or less equal to the radial inner diameter of the lead-through opening 52. Between the radial inner circumferential side of the radial inner circumferential section 104 and the radial outer circumferential side of the valve piston 60 an annular space 106 for a pleat of the diaphragm 94 is realized.

A surface dimension of the diaphragm 94 between its radial inner edge and its radial outer edge is bigger than a distance between the radial outer circumferential side of the connection pin 84 and the radial inner circumferential side of the indentation 48. In the home position, the valve leader 86 is positioned within the lead-through opening 52. The diaphragm 94 then is pleated. The pleat of the diaphragm 94 is arranged in the annular space 106.

A compression coil spring 108 is arranged in the inlet chamber 16 coaxial to the virtual axis 22. The coil spring 108 retains against the side of the main closing element 64, which faces toward the interior of the inlet chamber 16, on one hand and the inner side of the outer wall 26 of the inlet chamber 16 on the other hand. The coil spring 108 has a pretension. Thus, even in the home position, the coil spring 108 presses against the main closing element 64. An elastic force of the coil spring 108 is directed against the actuation direction 80 of the actuator 72.

Further a temperature sensor 110 is placed within the interior of the inlet chamber 16. It is arranged upstream of the main outlet opening 20 and the bypass outlet opening 28. The temperature sensor 110 is connected to the ECU 76 by a signal wire 112.

In a nonworking stage and after a cold start-up of the internal combustion engine, the control valve unit 10 is in its home position as shown in Figure 1. The main outlet opening 20 is closed by the main closing element 64. The bypass outlet opening 28 is given free by the bypass closing element 62. Cooling liquid flows from the inlet air duct through the inlet opening 38 into the inlet chamber 16. This is indicated in Figure 1 with an arrow 114. A temperature of the cooling liquid is measured by the temperature sensor 110 and transferred by the signal wire 112 to the ECU 76. As long as the temperature is below a predetermined limiting temperature, the ECU 76 does not energize the actuator 72. The cooling liquid is leaving the inlet chamber 16 through the bypass outlet opening 28, as indicated with arrows 116, and flows through the bypass outlet port 34 and the bypass duct into the bypass branch of the cooling circuit. The cooling liquid flows back through the inlet duct, the inlet port 40 and the inlet opening 38 into the inlet chamber 16. No cooling liquid gets through the main outlet opening 20, the outlet chamber 18, the main outlet port 56, the main outlet duct into the main branch to the cooling unit.

If the temperature sensor 110 measures a temperature of the cooling liquid in the inlet chamber 16 which is higher than the limiting temperature, the ECU 76 energizes the actuator 72. The actuator piston 78 is moved in actuation direction 80. It pushes the valve piston 60 with the main closing element 64 and the bypass closing element 62 against the spring force of the coil spring 108 in actuation direction 80. Additionally, the pleat of the diaphragm 94 is folded back. The main closing element 64 opens the main outlet opening 20. Simultaneously, the bypass closing element 62 closes the bypass outlet opening 28. The actuated end stop position of the control valve unit 10 is depicted in Figure 2. The cooling liquid flows through the main outlet opening 20, as indicated with arrows 118, into the outlet chamber 18. From the outlet chamber 18, the cooling liquid gets through the main outlet port 56 into the main branch of the cooling circuit. The cooling liquid passes through the cooling unit, where it is cooled down. The cooled cooling liquid flows into the inlet port 40 and gets into the inlet chamber 16.

If the temperature of the cooling liquid falls below the limiting temperature, the ECU 76 deactivates the actuator 72. The actuator piston 78 moves against the actuation direction 80 with help of the coil spring 108. The spring force of the coil spring 108 thereby presses the valve piston 60 against the bottom 90 of the valve leader 86. The main outlet opening 20 is closed by the main closing element 64. The bypass outlet opening 28 is given free by the bypass closing element 62. The control valve unit 10 is in its home position again. The cooling liquid flows as described above. All in all, the main closing element 64 and the bypass closing element 62 can inversely open or close the closable main outlet opening 20 and the closable bypass outlet opening 28.

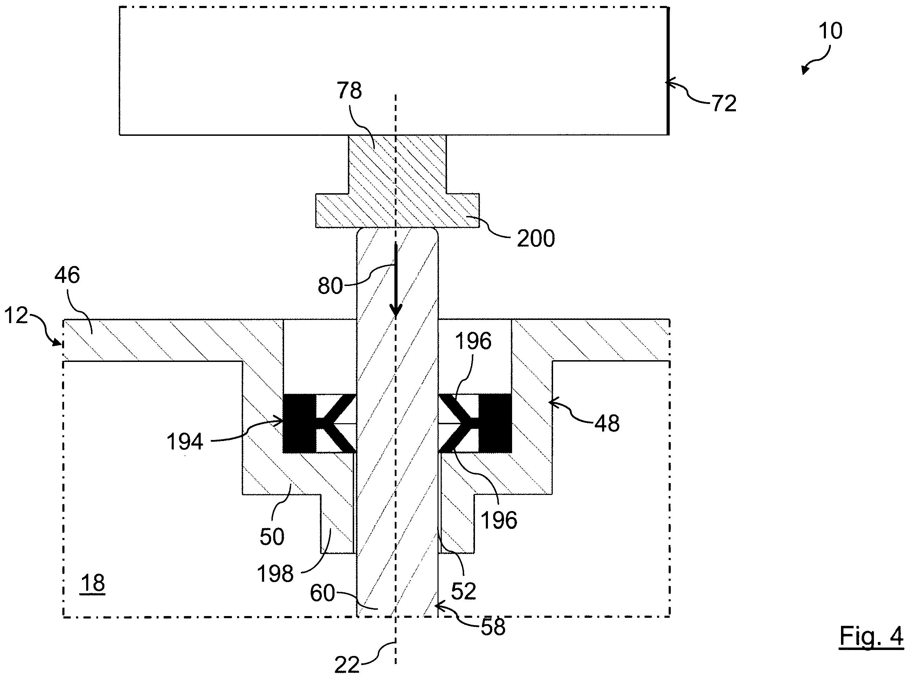

Figure 4 depicts a detail of an exemplary control valve unit (10) not according to the invention of a cooling circuit of an internal combustion engine of a motor vehicle in a home position. Those parts which are equal to those of the first embodiment according to Figures 1 to 3 have the same reference numbers. Different to the first embodiment, the example shown in figure 4 has a slide ring seal 194 instead of the diaphragm 94 for sealing the lead-through opening 52. The slide ring seal 194 is fixed on the inner side of the bottom wall 50 of the indentation 48. On its radial inner edge the slide ring seal 194 has two annular lips 196, which are lying tight against the radial outer circumferential side of the valve piston 60. If the actuator 72 pushes the valve piston 60 with its actuator piston 78 in actuation direction 80, the radial outer circumferential side of the valve piston 60 slides along the lips 196. Further a leading socket 198 for leading the valve piston 60 is mounted on the outer side of the bottom wall 50 of the indentation 48. Instead of a valve leader 86, the free end of the valve piston 60 retains directly against the free end of the actuator piston 78. The front face of the free end of the actuator piston 78 is acting as a stop unit for movements of the valve piston 60 against the actuation direction 80. The actuator piston 78 further has a collar 200 surrounding its free end.

The invention is not limited to a control valve unit 10 of a cooling circuit of an internal combustion engine of a motor vehicle. The invention can also be applied for other kinds of internal combustion engines, particularly industrial engines. The invention can further be applied for other kinds of liquid circuits, in particular for oil circuits.

The liquid flow in the valve housing 12 also can be in opposite direction. In this case the inlet opening 38 acts as an outlet opening and the outlet openings 20 and 28 act as closable inlet openings.

The valve housing 12, in particular the inlet chamber 16, can have more than one inlet port 40.

The valve housing 12, in particular the inlet chamber 16, can have less or more than the two closable outlet openings with according closing elements.

The electrically driven linear actuator 72 can have more than one actuator piston 78 for moving according separate closing elements.

Instead of a step motor another kind of electrically driven linear actuator 72 can be used. The actuator 72 also can be reversible.

The actuator 72 can operate the closing elements as proportional valves. The valves can be acted continuously variable into every intermediate position between home and end stop position.

The control valve unit 10 can have more than one electrically driven linear actuator 72 for controlling according valves with one or more closing elements each. Multiple electrically driven linear actuators can be combined in a control valve module for controlling liquid flows through according closable outlet or inlet openings.

Instead of the ECU 76 a separate electronic control device can be connected with the actuator 72 for controlling.

Instead of using wires 74 a control connection between the ECU 76 and the actuator 72 can be realized wireless.

The temperature sensor 110 can be arranged in a liquid-bearing space downstream of one of the outlet openings 20, 28. The temperature sensor 110 also can be arranged in a liquid- bearing space of the cooling circuit outside the valve housing 12.

Also more than one temperature sensors 110 can be arranged in different liquid-bearing spaces of the cooling circuit.

The signal connection between the temperature sensor 110 and the ECU 76 can be realized wireless.

Instead of the separate actuation piston 78 and the valve piston 60, one sole piston can be used for connecting the actuator 72 with the closing elements 62, 64.

Instead of the valve leader 86 another kind of leader element can connect the actuator piston 78 with the valve piston 60.

The valve leader 86 can also be made of a material different from plastic, for example metal.

Instead of the slide ring seal 194 another kind of dynamic gasket can be used.

Instead of the coil spring 108 another kind of return element can be used.

## Claims

1. Control valve unit (10) for a cooling circuit of an internal combustion engine in particular of a motor vehicle, comprising a valve housing (12), which has at least one inlet/outlet opening (38) and at least one closable outlet/inlet opening (20, 28), and at least one closing element (62, 64) actuated by a control device (72), which can open or close the at least one closable outlet/inlet opening (20, 28), wherein the control device comprises an electrically driven linear actuator (72) and at least one piston (60, 78), which is drivable at least by the actuator (72), and the at least one piston (60, 78) is arranged between the actuator (72) and the at least one closing element (62, 64) for direct coupling of the actuator (72) with the at least one closing element (62, 64) at least in one actuation direction (80), the actuator (72) is placed outside of a liquid-bearing area of the valve housing (12) and the valve housing (12) has at least one lead-through opening (52) for the at least one piston (60, 78), wherein at least one diaphragm (94) is sealing the at least one lead-through opening (52) against the at least one piston (60, 78), wherein a leader element (86) is connecting an end of a piston (78) of the actuator (72) and an end of a valve piston (60) of the at least one closing element (62, 64), **characterized in that** said at least one closing element (62, 64) comprises two closing elements (62, 64) and **in that** said valve piston (60) is realized in one piece with said two closing elements (62, 64), wherein a
return element, in particular a spring (108), retains against the at least one closing element (64) on one hand and against the valve housing (12) on the other hand, whereby a reset force of the return element (108) is directed in or against the actuation direction (80) of the linear actuator (72).

2. Control valve unit according to claim 1, **characterized in that** the valve housing (12) having at least two closable outlet/inlet openings (20, 28) and the at least one closing element (52, 64) can inversely open or close the at least two closable outlet/inlet openings (20, 28).

3. Control valve unit according to claim 1 or 2, **characterized in that** the leader element (86) has at least one stop unit (90), which stops a relative movement between the piston (78) of the actuator (72) and the piston (60) of the at least one closing element (62, 64) at least in one actuation direction (80) of the linear actuator (72).

4. Control valve unit according to any one of claims 1 to 3, **characterized in that** the leader element (86) is made of plastic.

## Patentansprüche

1. Steuerventileinheit (10) für einen Kühlkreislauf eines Verbrennungsmotors insbesondere eines Motorfahrzeugs, umfassend ein Ventilgehäuse (12), das mindestens eine Einlass-/Auslassöffnung (38) und mindestens eine schließbare Auslass-/Einlassöffnung (20, 28), und mindestens ein Verschlusselement (62, 64), das durch eine Steuervorrichtung (72) betätigt wird, aufweist, das die mindestens eine schließbare Auslass-/Einlassöffnung (20, 28) öffnen oder schließen kann, wobei die Steuervorrichtung einen elektrisch betriebenes lineares Stellglied (72) und mindestens einen Kolben (60, 78) umfasst, der mindestens durch das Stellglied (72) antreibbar ist, und der mindestens eine Kolben (60, 78) zwischen dem Stellglied (72) und dem mindestens einen Verschlusselement (62, 64) für direkte Kopplung des Stellglieds (72) mit dem mindestens einen Verschlusselement (62, 64) mindestens in einer Betätigungsrichtung (80) angeordnet ist, das Stellglied (72) außerhalb eines flüssigkeitsführenden Bereichs des Ventilgehäuses (12) platziert ist und das Ventilgehäuse (12) mindestens eine Durchgangsöffnung (52) für den mindestens einen Kolben (60, 78) aufweist, wobei mindestens eine Membran (94) die mindestens eine Durchgangsöffnung (52) gegen den mindestens einen Kolben (60, 78) abdichtet, wobei ein Führungselement (86) ein Ende eines Kolbens (78) des Stellglieds (72) und ein Ende eines Ventilkolbens (60) des mindestens einen Verschlusselements (62, 64) verbindet, **dadurch gekennzeichnet, dass** das mindestens eine Verschlusselement (62, 64) zwei Verschlusselemente (62, 64) umfasst und dass der Ventilkolben (60) in einem Stück mit den zwei Verschlusselementen (62, 64) ausgeführt ist, wobei ein Rückstellelement, insbesondere eine Feder (108), gegen das mindestens eine Verschlusselement (64) einerseits und gegen das Ventilgehäuse (12) andererseits liegt, wodurch eine Rückstellkraft des Rückstellelements (108) in der oder gegen die Betätigungsrichtung (80) des linearen Stellglieds (72) gerichtet ist.

2. Steuerventileinheit nach Anspruch 1, **dadurch gekennzeichnet, dass** das Ventilgehäuse (12) mindestens zwei schließbare Auslass-/Einlassöffnungen (20, 28) aufweist und das mindestens eine Verschlusselement (52, 64) die mindestens zwei schließbaren Auslass-/Einlassöffnungen (20, 28) umgekehrt öffnen oder schließen kann.

3. Steuerventileinheit nach Anspruch 1 oder 2, **dadurch gekennzeichnet, dass** das Führungselement (86) mindestens eine Stoppeinheit (90) aufweist, die eine relative Bewegung zwischen dem Kolben (78) des Stellglieds (72) und dem Kolben (60) des mindestens einen Verschlusselements (62, 64) mindestens in einer Betätigungsrichtung (80) des linearen Stellglieds (72) stoppt.

4. Steuerventileinheit nach einem der Ansprüche 1 bis 3, **dadurch gekennzeichnet, dass** das Führungselement (86) aus Kunststoff hergestellt ist.

## Revendications

1. Unité de soupape de commande (10) pour un circuit de refroidissement d'un moteur à combustion interne, en particulier d'un véhicule automobile, comprenant un boîtier de soupape (12), qui présente au moins une ouverture d'entrée/sortie (38) et au moins une ouverture de sortie/entrée pouvant être fermée (20, 28), et au moins un élément de fermeture (62, 64) actionné par un dispositif de commande (72), qui peut ouvrir ou fermer ladite au moins une ouverture de sortie/entrée pouvant être fermée (20, 28), dans laquelle le dispositif de commande comprend un actionneur linéaire (72) entraîné électriquement et au moins un piston (60, 78), qui peut être entraîné au moins par l'actionneur (72), et ledit au moins un piston (60, 78) est disposé entre l'actionneur (72) et ledit au moins un élément de fermeture (62, 64) pour un couplage direct de l'actionneur (72) avec ledit au moins un élément de fermeture (62, 64) au moins dans une direction d'actionnement (80), l'actionneur (72) est placé à l'extérieur d'une zone de support de liquide du boîtier de soupape (12) et le boîtier de soupape (12) a au moins une ouverture de passage (52) pour ledit au moins un piston (60, 78), dans laquelle au moins un diaphragme (94) rend étanche ladite au moins une ouverture de passage (52) contre ledit au moins un piston (60, 78), dans laquelle un élément de guidage (86) relie une extrémité d'un piston (78) de l'actionneur (72) et une extrémité d'un piston de soupape (60) dudit au moins un élément de fermeture (62, 64), **caractérisée en ce que** au moins un élément de fermeture (62, 64) comprend deux éléments de fermeture (62, 64) et **en ce que** ledit piston de soupape (60) est réalisé en une seule pièce avec lesdits deux éléments de fermeture (62, 64), dans laquelle un élément de rappel, en particulier un ressort (108), s'appuie d'une part contre ledit au moins un élément de fermeture (64) et d'autre part contre le boîtier de soupape (12), de sorte qu'une force de rappel de l'élément de rappel (108) est dirigée dans ou contre la direction d'actionnement (80) de l'actionneur linéaire (72).

2. Unité de soupape de commande selon la revendication 1, **caractérisée en ce que** le boîtier de soupape (12) a au moins deux ouvertures de sortie/entrée pouvant être fermées (20, 28) et ledit au moins un élément de fermeture (52, 64) peut ouvrir ou fermer de manière inverse lesdites au moins deux ouvertures de sortie/entrée pouvant être fermées (20, 28).

3. Unité de soupape de commande selon la revendication 1 ou 2, **caractérisée en ce que** l'élément de guidage (86) a au moins une unité d'arrêt (90), qui arrête un mouvement relatif entre le piston (78) de l'actionneur (72) et le piston (60) dudit au moins un élément de fermeture (62, 64) au moins dans une direction d'actionnement (80) de l'actionneur linéaire (72).

4. Unité de soupape de commande selon l'une quelconque des revendications 1 à 3, **caractérisée en ce que** l'élément de guidage (86) est réalisé en matière plastique.
